# EUROPEAN PATENT SPECIFICATION

(11) **EP 1 982 907 B1**
(45) Date of publication and mention of the grant of the patent: **23.09.2009**
(21) Application number: 07010592.9
(22) Date of filing: 29.05.2007
(51) Int. Cl.: B62J 1/00

(54) **Frame for a bicycle saddle**
Sattelgestell für ein Fahrrad
Chassis de selle pour une bicyclette

(30) Priority: 19.04.2007 CN 200710098316
(43) Date of publication of application: 22.10.2008
(73) Proprietor: Velo Enterprise Co., Ltd., Dajia Township, Taichung County 437 (TW)
(72) Inventor: Hung, Chun-Fu, Dajia Township Taichung County 437 (TW)
(74) Representative: Becker Kurig Straus

(56) References cited:
- EP-A- 1 837 271
- WO-A-20/06001041
- DE-C- 106 430

## Description

### BACKGROUND OF THE INVENTION

### 1. Field of the Invention

The present invention generally relates to bicycle saddles, particularly to a base especially designed for constructing a bicycle saddle being light-weight yet hardy and in the same time having vibration absorbing and ventilation effect.

### 2. Description of the Related Art

In general, all prior art bicycle saddles utilize a pair of parallel support rails running longitudinally of the saddle and spaced from its underside to attach to the bicycle seat post. The rails are typically made of metal such as aluminum, steel, titanium, or the like and engaged and held in place by appropriate mounting hardware associated with the bicycle seat post.

A disadvantage of the prior art saddles is that the rails tend to bend in use, so that the seat eventually goes out of alignment. Also, the attachment brackets for the rails interfere with the aerodynamic flow of air under the saddle. In addition, for utilizing the rails and the attachment brackets, the weight of the prior art bicycle saddles can not be effectively reduced.

Currently, Japan Utility Model No. 3128329 discloses a solution to resolve the disadvantages of the prior art mentioned above in which a hollowed mounting portion disposed on the underneath side of a saddle body presents to easily mount the saddle body on bicycle seat posts without using prior art support rails. The drawback of this solution is that the hollowed mounting portion is too rigid to effectively absorb vibrations produced during bicycle riding.

A saddle having the features according to the preamble of claim 1 is known from WO-A-2006 00 1041.

Consequently, there is a need for a new bicycle saddle that provides high strength/low weight characteristics, while increasing vibration absorbing and ventilation effect thereof.

### SUMMARY OF THE INVENTION

A base for a bicycle saddle in accordance with the present invention generally includes a body having a relatively narrow anterior portion which fits between a bicycle rider's crotch, a relatively wider posterior portion for supporting a bicycle rider's buttocks, a longitudinal axis dividing the body into a right portion and a left portion, and an opening extending along the longitudinal axis of the body.

The base also has a left supporting member extending downwardly from an underside of the left portion of the body in such a way that a left cushion means is formed when the base is mounted on a bicycle frame to absorb the shock and vibration produced during bicycle riding.

The base further includes a right supporting member extending downwardly from an underside of the right portion of the body in such a way that a right cushion means is formed when the base is mounted on a bicycle frame to absorb the shock and vibration produced during bicycle riding.

The base, in addition, includes a coupling member disposed on a free end of each of the supporting members in such a way that it corresponds to the opening to define an open receiving room between the right and left supporting members for receiving means for coupling said base to a bicycle frame.

As described above, the novel base can be mounted on a bicycle frame without prior art support rails so that the weight of a bicycle saddle with the base herein disclosed is effectively reduced. In addition, the base has two supporting members each of which defines a cushion means so that a bicycle saddle with the base herein disclosed would provide high strength/low weight characteristics, while increasing vibration absorbing effect thereof.

### BRIEF DESCRIPTION OF THE DRAWINGS

The present invention may be more clearly understood with reference to the following detailed description, in conjunction with the appended drawings of which:
FIG. 1 is a perspective view of a preferred embodiment of a base according to the present invention;
FIG. 2 is a top view of the embodiment shown in FIG. 1;
FIG. 3 is a cross-sectional view taken along the line 3-3 of FIG. 2;
FIG. 4 is a cross-sectional view taken along the line 4-4 of FIG. 2;
FIG. 5 is a back view of the embodiment shown in FIG. 1;
FIG. 6 is a side view showing that the embodiment shown in FIG. 1 mounted on a seat post by a mounting means; and
FIG. 7 is a cross-sectional view taken along the line 7-7 of FIG.6.

### DETAILED DESCRIPTION OF THE PRESENT INVENTION

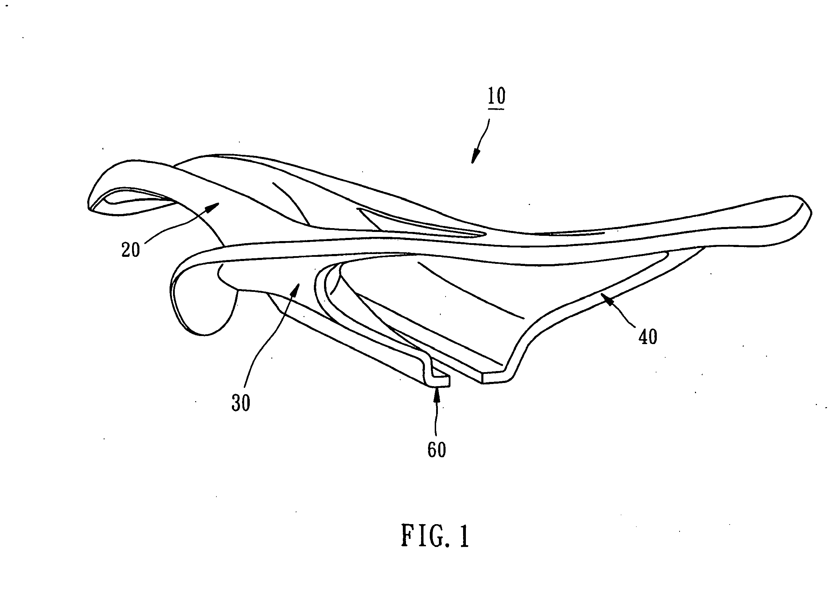

With reference to FIG. 1, there is shown a base 10 for a bicycle in accordance with the present invention, which generally includes a body 20, left and right supporting plates 30 and 40 extending from the underside of the base 20, and a bottom plate 60 is connected with the free end of each of the supporting plates 30 and 40. The base 20 typically works as a support of a bicycle saddle and it can be covered by a pad and a covering.

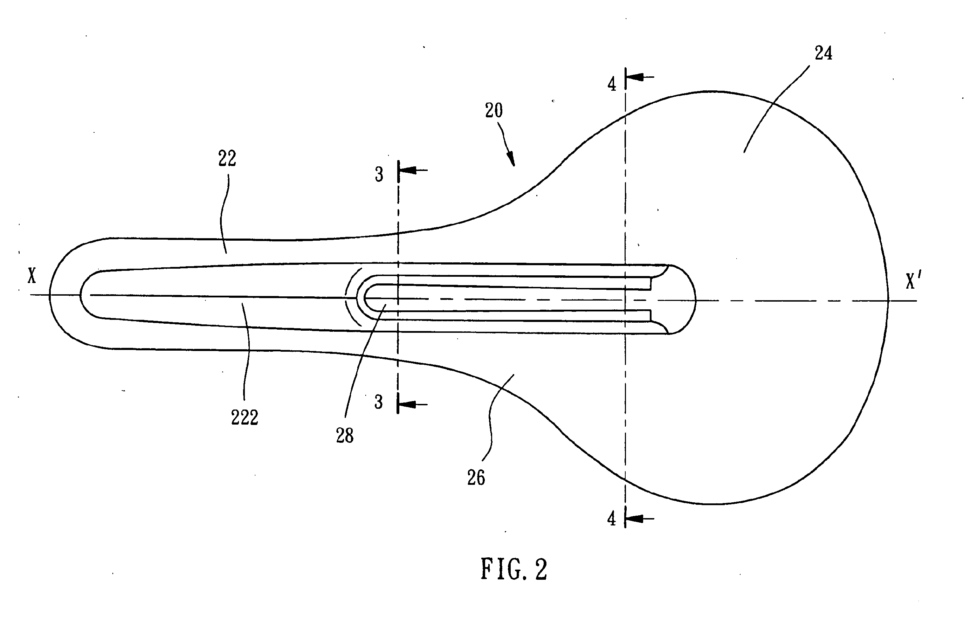

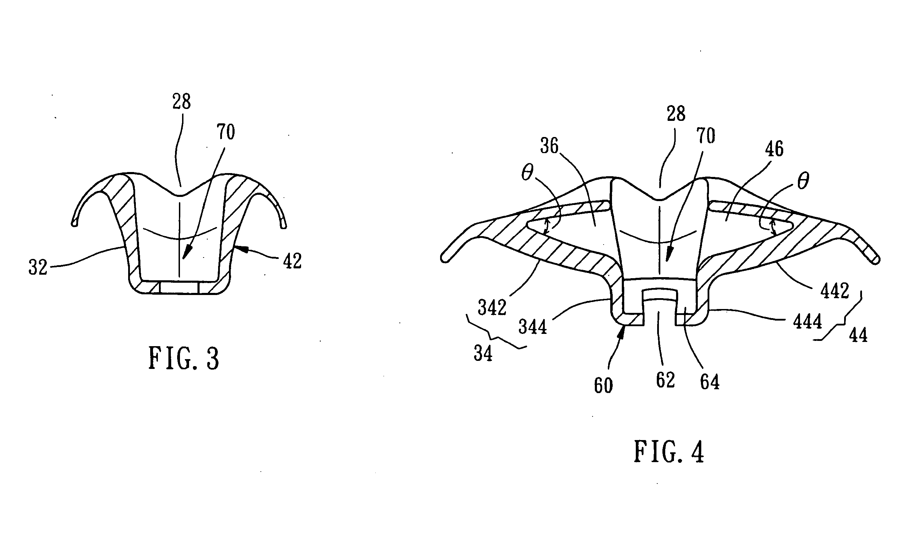

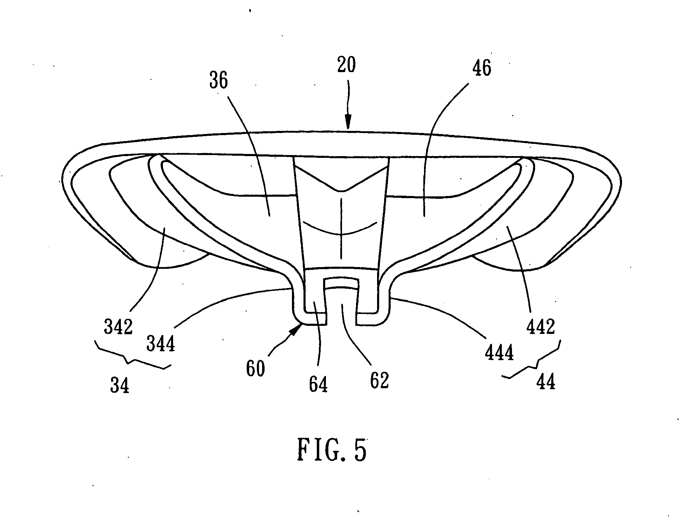

Referring now to FIGS. 2-5, the body 20 has a relatively narrow anterior portion 22 which fits between a bicycle rider's crotch, a relatively wider posterior 24 portion for supporting a bicycle rider's buttocks, a middle portion 26 linking the narrow anterior portion 22 with the wider posterior portion24, and an opening 28 extending along a longitudinal axis X-X' of the body. In this embodiment, the opening 28 extends along the longitudinal axis X-X' from a later area of the anterior portion 22, through the middle portion 26, to a front area of the wider posterior portion24. The upper surface of the anterior portion 22 provides a channel 222 extending along the longitudinal axis X-X' of the body 20 and communicating with the front side of the opening 28.

The left supporting plate 30 has a first section 32 near the narrow anterior portion 22 of the body 20 and a second section 34 near the wider posterior portion 24. The first section 32 extends vertically and downwardly from the left side of the opening 28 of the body 20. The second section 34 has a first upper portion 342 and a first lower portion 344. The first upper portion 342 extends downwardly and inwardly from the left edge of the underside of the wider posterior portion 24 in such a way that an included angle θ between the body 20 and the second section 34 is formed to define a space 36 therebetween. The included angle θ, in the embodiment, is about 30-45 degrees. The first lower portion 344 extends vertically and downwardly from the free end of the first upper portion 342 so that a left cushion means is defined by the first upper portion 342 to effectively absorb the shock and vibration produced during bicycle riding. In another embodiment of the present invention, for getting a better shock and vibration absorbing effect, the first upper portion 342 can be wavily shaped.

The right supporting plate 40 has a third section 42 near the narrow anterior portion 22 of the body 20 and a fourth section 44 near the wider posterior portion 24. The third section 42 extends vertically and downwardly from the right side of the opening 28 of the body 20. The fourth section 44 has a second upper portion 442 and a second lower portion 444. The second upper portion 442 extends downwardly and inwardly from the right edge of the underside of the wider posterior portion 24 in such a way that an included angle θ between the body 20 and the second upper portion 442 is formed to define a space 46 therebetween. The included angle θ, in the embodiment, is about 30-45 degrees. The second lower portion 444 extends vertically and downwardly from the free end of the second upper portion 442 so that a right cushion means is defined by the second upper portion 442 to effectively absorb the shock and vibration produced during bicycle riding. In another embodiment of the present invention, as the first upper portion 342, for getting a better shock and vibration absorbing effect, the second upper portion 442 can be wavily shaped.

The bottom plate 60 is connected with the free end of the first lower portion 344 of the left supporting plate 34 and the free end of the second lower 444 of the right supporting plate 44. The bottom plate 60 is located just under the opening 28 such that an open receiving room 70 is defined. The bottom plate 60, in this embodiment, has a cut out 62 and an annular shoulder 64 is defined by the cut out 62.

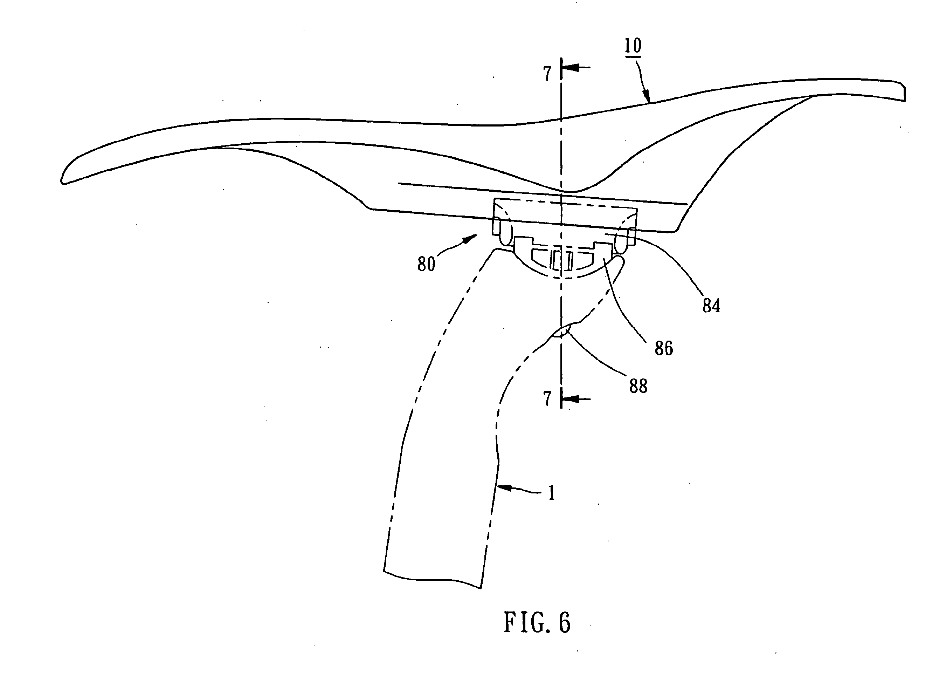

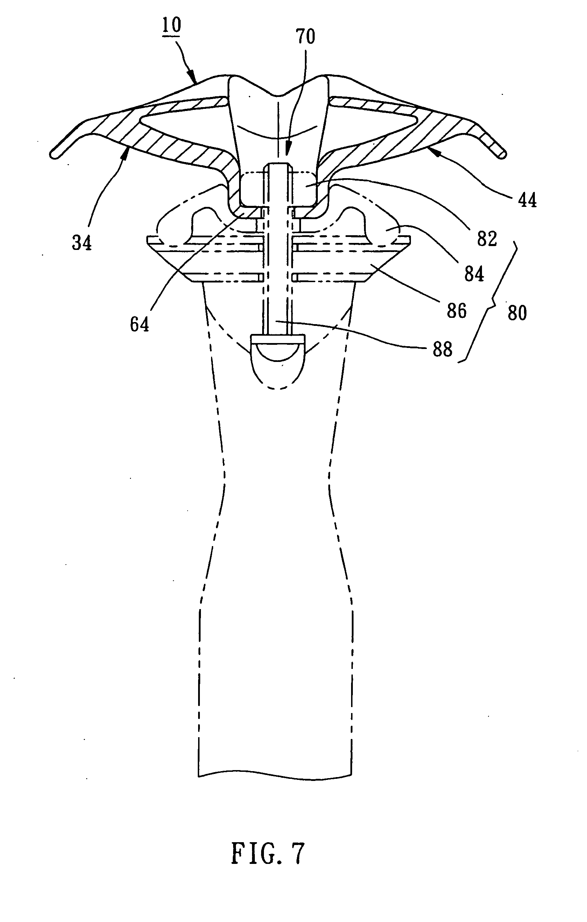

Referring lastly to FIG.6 and FIG.7, the base 10 is coupled to a bicycle seating post 1 by a mounting means 80. Mounting means 80 includes a nut 82, a fixing plate 84, a connecting plate 86 and a bolt 88. In combination, the nut 82 is received in the receiving room 70 and leans against the shoulder 64 of the bottom plate 60. The fixing plate 84 is placed under the bottom plate 60 and the connecting plate 86 is placed on the top end of the seating post 1 to couple with the fixing plate 84. The bolt 88 passes through the top end of the post 1, the connecting plate 86, the fixing plate 84 and engages lastly with the nut 82. Of course, there may be different ways to couple the base 10 to bicycle seating post. The disclosure herein is just an example. And it must be mentioned that the mounting means is not a feature or element of the present invention and can not be used to limit the scope of the claims of the present invention.

As the construction mentioned above, a bicycle saddle with the base 10 can be coupled with a bicycle seating post without using prior art support rails so that the weight thereof would be outstandingly reduced when comparing with the prior art bicycle saddles. And in the same time, the strength of the base 10 can be reinforced by the supporting plates thereof so that the high strength/low weight characteristics are provided. In addition, because the bicycle saddle constructed by the base 10 can provide two cushion means positioned between the saddle and the bicycle frame, so that the shock and/or vibration transferring from the bicycle frame to the saddle during bicycle riding can be mostly and effectively absorbed thereby. Furthermore, the base 10 has an air distribution passage extending from the front end of the channel 222 on the upper surface of the anterior portion 22, through the opening 28, to the rear end of the open receiving room 70 so that ambient air can flow through the air distribution passage during bicycle riding to provide an effective ventilation.

## Claims

1. A base for a bicycle saddle, the base (10) comprising:
a body (20) having a relatively narrow anterior portion (22) which fits between a bicycle rider's crotch, a relatively wider posterior portion (24) for supporting a bicycle rider's buttocks, a longitudinal axis (X-X') dividing said body (20) into a right portion and a left portion, and an opening (28) extending along said longitudinal axis of said body; **characterized in that**
a left supporting member extends downwardly from an underside of said left portion of said body (20) in such a way that a left cushion means is formed to absorb the shock and vibration produced during bicycle riding;
a right supporting member extends downwardly from an underside of said right portion of said body (20) in such a way that a right cushion means is formed to absorb the shock and vibration produced during bicycle riding; and
a coupling member is disposed on a free end of each of said supporting members in such a way that it corresponds to said opening to define an open receiving room (70) between said right and left supporting members for receiving means (80) for coupling said base (10) to a bicycle frame (1),
further **characterized in that** said left supporting member includes a left supporting plate (30) having a first section (32) near said narrow anterior portion (22) and a second section (34) near said wider posterior portion (24), said first section (32) extending vertically and downwardly from a left side of said opening (28) of said body (20), said second section (34) extending downwardly and inwardly from an area located on the underside of said left portion of said body (20) and distanced from said left side of said opening (28) a predetermined distance such that a space (36) is formed between said body (20) and said second section (34), and said left cushion means is defined by said second section (34) to absorb the shock and vibration produced during bicycle riding,
and further **characterized in that** said right supporting member includes a right supporting plate (40) having a third section (42) near said narrow anterior portion (22) and a fourth section (44) near said wider posterior portion (24), said third section (42) extending vertically and downwardly from a right side of said opening of said body (20), said fourth section (44) extending downwardly and inwardly from an area located on the underside of said right portion of said body (20) and distanced from said right side of said opening (28) a predetermined distance such that a space (46) is formed between said body (20) and said fourth section (44), and said right cushion means is defined by said fourth section (44) to absorb the shock and vibration produced during bicycle riding;

2. The base for a bicycle saddle as claimed in claim 1, which is **characterized in that** said second section (34) of said left supporting plate (30) includes a first upper portion (342) disposed in such a way that an acute angle (θ) is defined between said body (20) and said first upper portion (342).

3. The base for a bicycle saddle as claimed in claim 1, which is **characterized in that** said fourth section (44) of said right supporting plate (40) includes a second upper portion (442) disposed in such a way that an acute angle (θ) is defined between said body (20) and said second upper portion (442).

4. The base for a bicycle saddle as claimed in claim 1, which is **characterized in that** said coupling member includes a bottom plate (60) with a cut out (62) and a shoulder (64) defined by said cut out (62).

5. The base for a bicycle saddle as claimed in claim 2, which is **characterized in that** said first upper portion (342) of said second section (34) of said left supporting plate (30) is wavily shaped.

6. The base for a bicycle saddle as claimed in claim 3, which is **characterized in that** said second upper portion (442) of said fourth section (44) of said right supporting plate (40) is wavily shaped.

7. The base for a bicycle saddle as claimed in claim 2, which is **characterized in that** said second section (34)of said left supporting plate (30) further includes a first lower portion (344) extending downwardly and vertically from a free end of said first upper portion (342).

8. The base for a bicycle saddle as claimed in claim 3, which is **characterized in that** said fourth section (44) of said right supporting plate (40) further includes a second lower portion (444) extending downwardly and vertically from a free end of said second upper portion (442).

9. The base for a bicycle saddle as claimed in claim 1, which is **characterized in that** an upper surface of said narrow anterior portion (22) of said body (20) has a channel (222) extending along said longitudinal axis (X-X') of said body (20).

10. The base for a bicycle saddle as claimed in claim 9, which is **characterized in that** said channel (222) of said narrow anterior portion (22) communicates with a front side of said opening (28).

## Patentansprüche

1. Basis für einen Fahrradsattel, worin die Basis (10) umfasst:
einen Körper (20), der einen relativ schmalen vorderen Bereich (22) aufweist, der zwischen den Schritt eines Fahrradfahrers passt, einen relativ weiten hinteren Bereich (24) zum Stützen der Gesäßbacken eines Fahrradfahrers, eine longitudinale Achse (X-X'), die den Körper (20) in einen rechten Bereich und einen linken Bereich teilt, und eine Öffnung (28), die sich entlang der longitudinalen Achse des Körpers erstreckt, **dadurch gekennzeichnet, dass**
ein linkes Stützelement sich von einer Unterseite des linken Bereichs des Körpers (20) auf derartige Weise nach unten erstreckt, dass ein linkes Dämpfungsmittel gebildet wird, um den/die während des Fahrradfahrens erzeugten Stoß und Schwingung zu absorbieren,
ein rechtes Stützelement sich von einer Unterseite des rechten Bereichs des Körpers (20) auf derartige Weise nach unten erstreckt, dass ein rechtes Dämpfungsmittel gebildet wird, um den/die während des Fahrradfahrens erzeugten Stoß und Schwingung zu absorbieren, und
ein Kopplungselement an einem freien Ende von jedem der Stützelemente auf derartige Weise angeordnet ist, dass es mit der Öffnung übereinstimmt, um zwischen dem rechten und linken Stützelement einen offenen Aufnahmeraum (70) für Aufnahmemittel (80) zu definieren, um die Basis (10) an einen Fahrradrahmen (1) zu koppeln,
weiterhin **dadurch gekennzeichnet, dass** das linke Stützelement eine linke Stützplatte (30) umfasst, die nahe dem schmalen vorderen Bereich (22) einen ersten Abschnitt (32) und nahe dem weiten hinteren Bereich (24) einen zweiten Abschnitt (34) aufweist, wobei sich der erste Abschnitt (32) von einer linken Seite der Öffnung (28) des Körpers (20) vertikal und nach unten erstreckt, und wobei sich der zweite Abschnitt (34) von einem an der Unterseite des linken Bereichs des Körpers (20) lokalisierten Bereich nach unten und innen erstreckt und von der linken Seite der Öffnung (28) mit einem bestimmten Abstand beabstandet ist, so dass zwischen dem Körper (20) und dem zweiten Abschnitt (34) ein Raum (36) gebildet wird, und wobei das linke Dämpfungsmittel durch den zweiten Abschnitt (34) definiert wird, um den/die während des Fahrradfahrens erzeugten Stoß und Schwingung zu absorbieren,
und weiterhin **dadurch gekennzeichnet, dass** das rechte Stützelement eine rechte Stützplatte (40) umfasst, die nahe dem schmalen vorderen Bereich (22) einen dritten Abschnitt (42) und nahe dem weiten hinteren Bereich (24) einen vierten Bereich (44) aufweist, wobei sich der dritte Abschnitt (42) von einer rechten Seite der Öffnung des Körpers (20) vertikal und nach unten erstreckt, und wobei sich der vierte Abschnitt (44) von einem an der Unterseite des rechten Bereichs des Körpers (20) lokalisierten Bereich nach unten und innen erstreckt und von der rechten Seite der Öffnung (28) mit einem bestimmten Abstand beabstandet ist, so dass zwischen dem Körper (20) und dem vierten Abschnitt (44) ein Raum (46) gebildet wird, und wobei das rechte Dämpfungsmittel durch den vierten Abschnitt (44) definiert wird, um den/die während des Fahrradfahrens erzeugten Stoß und Schwingung zu absorbieren.

2. Basis für einen Fahrradsattel nach Anspruch 1**, dadurch gekennzeichnet, dass** der zweite Abschnitt (34) der linken Stützplatte (30) einen ersten oberen Bereich (342) umfasst, der in derartiger Weise angeordnet ist, dass zwischen dem Körper (20) und dem ersten oberen Bereich (342) ein spitzer Winkel (θ) definiert wird.

3. Basis für einen Fahrradsattel nach Anspruch 1, **dadurch gekennzeichnet, dass** der vierte Abschnitt (44) der rechten Stützplatte (40) einen zweiten oberen Bereich (442) umfasst, der in derartiger Weise angeordnet ist, dass zwischen dem Körper (20) und dem zweiten oberen Bereich (442) ein spitzer Winkel (θ) definiert wird.

4. Basis für einen Fahrradsattel nach Anspruch 1**, dadurch gekennzeichnet, dass** das Kopplungselement eine Bodenplatte (60) mit einer Aussparung (62) und einer Schulter (64) umfasst, die durch die Aussparung (62) definiert wird.

5. Basis für einen Fahrradsattel nach Anspruch 2, **dadurch gekennzeichnet, dass** der erste obere Bereich (342) des zweiten Abschnitts (34) der linken Stützplatte (30) wellig geformt ist.

6. Basis für einen Fahrradsattel nach Anspruch 3, **dadurch gekennzeichnet, dass** der zweite obere Bereich (442) des vierten Abschnitts (44) der rechten Stützplatte (40) wellig geformt ist.

7. Basis für einen Fahrradsattel nach Anspruch 2, **dadurch gekennzeichnet, dass** der zweite Abschnitt (34) der linken Stützplatte (30) weiterhin einen ersten unteren Bereich (344) umfasst, der sich von einem freien Ende des ersten oberen Bereichs (342) nach unten und vertikal erstreckt.

8. Basis für einen Fahrradsattel nach Anspruch 3, **dadurch gekennzeichnet, dass** der vierte Abschnitt (44) der rechten Stützplatte (40) weiterhin einen zweiten unteren Bereich (444) umfasst, der sich von einem freien Ende des zweiten oberen Bereichs (442) nach unten und vertikal erstreckt.

9. Basis für einen Fahrradsattel nach Anspruch 1, **dadurch gekennzeichnet, dass** eine obere Oberfläche des schmalen vorderen Bereichs (22) des Körpers (20) einen Kanal (222) aufweist, der sich entlang der longitudinalen Achse (X-X') des Körpers (20) erstreckt.

10. Basis für einen Fahrradsattel nach Anspruch 9, **dadurch gekennzeichnet, dass** der Kanal (222) des schmalen vorderen Bereichs (22) mit einer vorderen Seite der Öffnung (28) in Verbindung steht.

## Revendications

1. Une base pour selle de bicyclette, la base (10) comprenant :
un corps (20) comportant une portion avant (22) relativement étroite qui s'adapte à l'entrecuisse d'un cycliste, une portion arrière relativement plus large (24) pour supporter les fesses d'un cycliste, un axe longitudinal (X-X') divisant ledit corps (20) en une portion droite et une portion gauche et une ouverture (28) s'étendant le long dudit axe longitudinal dudit corps, **caractérisée en ce que**
un membre de soutien gauche s'étend vers le bas à partir d'une face inférieure de ladite portion gauche dudit corps (20) d'une façon telle qu'un moyen de rembourrage gauche est formé pour absorber choc et vibration produites durant la course en bicyclette ;
un membre de soutien droit s'étend vers le bas à partir d'une face inférieure de ladite portion droite dudit corps (20) d'une façon telle qu'un moyen de rembourrage droit est formé pour absorber choc et vibration produites durant la course en bicyclette ;
un membre d'accouplement est disposé sur une extrémité libre de chacun desdits membres de soutien d'une façon telle qu'il correspond à ladite ouverture pour définir une chambre de réception ouverte (70) entre lesdits membres de soutien droit et gauche pour recevoir un moyen (80) pour accoupler ladite base (10) à un cadre de bicyclette (1) ;
**caractérisée en outre en ce que** ledit membre de soutien gauche comprend une plaque de soutien (30) comportant une première section (32) proche de ladite portion antérieure étroite (22) et une seconde section (34) proche de ladite portion plus large (24), ladite première section (32) s'étendant verticalement et vers le bas à partir d'un côté gauche de ladite ouverture (28) dudit corps (20), ladite seconde section (34) s'étendant vers le bas et à l'intérieur à partir d'une zone localisée sur la face inférieure de ladite portion gauche dudit corps (20) et distante de ladite face gauche de ladite ouverture (28) d'une distance prédéterminée telle qu'un espace (36) est formé entre ledit corps (20) et une seconde section (34), et ledit moyen de rembourrage gauche est défini par ladite seconde section (34) pour absorber choc et vibration produites durant la course en bicyclette ; et
**caractérisée en outre en ce que** ledit membre de soutien droit comprend une plaque de soutien (40) comportant une troisième section (42) proche de ladite portion antérieure étroite (22) et une quatrième section (44) proche de ladite portion plus large (24), ladite troisième section (42) s'étendant verticalement et vers le bas à partir d'un côté droit de ladite ouverture (28) dudit corps (20), ladite quatrième section (44) s'étendant vers le bas et à l'intérieur à partir d'une zone localisée sur la face inférieure de ladite portion droite dudit corps (20) et distante de ladite face droite de ladite ouverture (28) d'une distance prédéterminée telle qu'un espace (46) est formé entre ledit corps (20) et ladite quatrième section (44), et ledit coussin droit est défini par ladite quatrième section (44) pour absorber choc et vibration produites durant la course en bicyclette.

2. La base pour selle de bicyclette telle que revendiquée dans la revendication 1 qui est **caractérisée en ce que** ladite seconde section (34) de ladite plaque de soutien gauche (30) comprend une première portion supérieure (342 disposée d'une façon telle qu'un angle aigu θ est défini entre ledit corps (20) et ladite première portion supérieure (342).

3. La base pour selle de bicyclette telle que revendiquée dans la revendication 1 qui est **caractérisée en ce que** ladite quatrième section (44) de ladite plaque de soutien droite (40) comprend une seconde portion supérieure (442) disposée d'une façon telle qu'un angle aigu θ est défini entre ledit corps (20) et ladite seconde portion supérieure (442).

4. La base pour selle de bicyclette telle que revendiquée dans la revendication 1 qui est **caractérisée en ce que** ledit membre d'accouplement comprend une plaque de fond (60) avec une découpe (62) et une épaule (64) définie par ladite découpe (62).

5. La base pour selle de bicyclette telle que revendiquée dans la revendication 2 qui est **caractérisée en ce que** ladite première portion supérieure (342) de ladite seconde section (34) de ladite plaque de soutien gauche (30) est de forme ondulée.

6. La base pour selle de bicyclette telle que revendiquée dans la revendication 3 qui est **caractérisée en ce que** ladite seconde portion supérieure (442) de ladite quatrième section (44) de ladite plaque de soutien droite (40) est de forme ondulée.

7. La base pour selle de bicyclette telle que revendiquée dans la revendication 2 qui est **caractérisée en ce que** la seconde section (34) de ladite plaque de soutien gauche (30) comprend en outre une première portion inférieure (344) s'étendant vers le bas et verticalement à partir d'une extrémité libre de ladite portion supérieure (342).

8. La base pour selle de bicyclette telle que revendiquée dans la revendication 3 qui est **caractérisée en ce que** la quatrième section (44) de ladite plaque de soutien droite (40) comprend en outre une première portion inférieure (444) s'étendant vers le bas et verticalement à partir d'une extrémité libre de ladite portion supérieure (442).

9. La base pour selle de bicyclette telle que revendiquée dans la revendication 1 qui est **caractérisée en ce qu'**une surface supérieure de ladite portion avant étroite (22) dudit corps (20) comporte un canal (222) s'étendant le long de l'axe longitudinal (X-X') dudit corps (20).

10. La base pour selle de bicyclette telle que revendiquée dans la revendication 9 qui est **caractérisée en ce que** ledit canal (222) de ladite portion avant (22) communique avec une face avant de ladite ouverture (28).
